(19) **Europäisches Patentamt / European Patent Office / Office européen des brevets**

(11) **EP 2 664 376 A1**

(12) **EUROPEAN PATENT APPLICATION**

(43) Date of publication:
**20.11.2013 Bulletin 2013/47**

(51) Int Cl.:
**B01J 20/28** (2006.01)   **B01J 20/02** (2006.01)
**B01J 20/06** (2006.01)   **B01J 20/30** (2006.01)
**C02F 1/28** (2006.01)   **C02F 1/62** (2006.01)

(21) Application number: **12167884.1**

(22) Date of filing: **14.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Universität Bayreuth**
  **95440 Bayreuth (DE)**
• **G.E.O.S. Ingenieurgesellschaft mbH**
  **09633 Halsbrücke (DE)**

(72) Inventors:
• **Jannek, Eberhard**
  **09599 Freiberg (DE)**
• **Peiffer, Stefan**
  **95445 Bayreuth (DE)**
• **Burghardt, Diana**
  **01187 Dresden (DE)**

• **Simon, Elisabeth**
  **01445 Radebeul (DE)**
• **Rostan, Michael**
  **78112 St. Georgen im Schwarzwald (DE)**
• **Fischer, Heike**
  **09599 Freiberg (DE)**
• **Lambrecht, Johannes**
  **01097 Dresden (DE)**
• **Martin, Mirko**
  **09599 Freiberg (DE)**
• **Glombitza, Franz**
  **09224 Chemnitz (DE)**
• **Griebel, Ingeborg**
  **08123 Mülsen (DE)**

(74) Representative: **Vossius & Partner**
**Siebertstrasse 4**
**81675 München (DE)**

(54) **An adsorbent comprising schwertmannite, a method of preparing the adsorbent and the use of the adsorbent for purifying water or gas**

(57)   The present invention relates to methods of preparing an adsorbent comprising schwertmannite. The adsorbent is suitable for purifying a liquid or gas.

EP 2 664 376 A1

**Description**

**Field of the invention**

The present invention relates to an adsorbent comprising schwertmannite, a method of preparing the adsorbent and the use of the adsorbent for purifying a liquid or gas.

**Background of the invention**

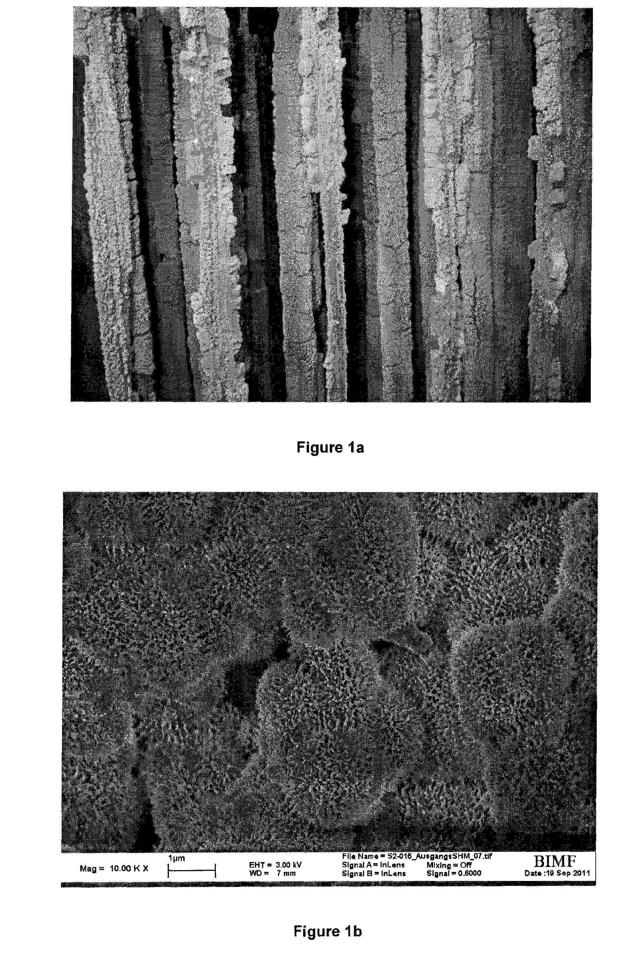

Schwertmannite is an iron-oxyhydroxysulfate which has the chemical formula $Fe_8O_8(OH)_{8-2x}(SO_4)_x$ wherein $1 \leq x \leq 1.75$. It can also contain water of crystallization. It can be found in nature, e.g., in acidic sulfate springs and soils. However, it is typically formed in acidic and sulfate rich mine drainage as a secondary mineral upon oxidation of Fe(II) in a biologically mediated process. Schwertmannite can also be generated in a biotechnological process after aeration of mining process waters. This reaction is taken advantage of in a pilot plant for the treatment of process waters from lignite mining in Tzschelln (Lausitz, Germany) which was designed by G.E.O.S. mbH. Figures 1a and 1b show the typical surface-rich aggregates of needle-like nanocrystals which are formed in the pilot plant. Schwertmannite transforms to ferric hydroxides of high specific surface area once exposed to water containing at least some alkalinity. Without wishing to be bound by theory, the inventors assume that the known capacity of schwertmannite for removing contaminants such as oxoanions from water will not be detrimentally effected by this transformation reaction whereby the contaminants are either surface-adsorbed or incorporated into the bulk.

Peiffer et al. (Environ. Sci. Technol. 2007, 41 3159-3164) describe the reactivity of ferric oxides such as schwertmannite toward $H_2S$ at low pH.

In the past, schwertmannite has also been used for removing hazardous chemicals such as arsenic from wastewater. JP 2005/095732 describes the use of schwertmannite for adsorbing selenium and chromium from polluted water and polluted soil. In this reference the schwertmannite is employed in powder form. This method is not advantageous for large scale use because the schwertmannite powder has to be laboriously separated from the treated water. In order to overcome this disadvantage it has been proposed to employ schwertmannite on various supports such as inorganic fibers (JP 2005-074259 A), activated carbon (JP 2006-326405 A) or magnetite fine particles (US 2009/0324467 A). The preparation of these products is costly and complicated.

Therefore, it was an object of the present invention to provide a method of preparing an adsorbent comprising schwertmannite which is inexpensive and simple. The advantageous adsorption properties of schwertmannite should not be impaired by the method. It is further desirable to provide an adsorbent comprising schwertmannite which is filter stable and has a high abrasion resistance, so that it can be used, for example, in passive water treatment units.

**Summary of the invention**

In one embodiment, the present invention relates to a method of preparing an adsorbent comprising schwertmannite, wherein the method comprises the following steps:

(i) providing a composition comprising schwertmannite and water, wherein the water content of the composition is from about 7.5 to about 25 wt.-%; and
(ii) compacting the composition to provide a compacted composition.

In a further embodiment, a method of preparing an adsorbent comprising schwertmannite is referred to which comprises the following steps:

(a) providing a composition comprising schwertmannite;
(b) mixing the composition with an organic polymer or a precursor of an organic polymer to provide a mixed composition;
(c) solidifying or curing the organic polymer or the precursor to provide a solidified or cured composition.

In yet another embodiment, the present invention relates to a method of preparing an adsorbent comprising schwertmannite, wherein the method comprises the following steps:

(A) providing a composition comprising schwertmannite;
(B) mixing the composition with an organic polymer or a precursor of an organic polymer to provide a mixed composition;
(C) compacting the mixed composition to provide a compacted composition.

Adsorbents obtainable by the above methods are also subject-matter of the present invention.

The adsorbents can be used for purifying a liquid or a gas.

In particular, the present invention relates to the following items.

1. A method of preparing an adsorbent comprising schwertmannite, wherein the method comprises the following steps:

(i) providing a composition comprising schwertmannite and water, wherein the water content of the composition is from about 7.5 to about 25 wt.-%; and
(ii) compacting the composition to provide a compacted composition.

2. The method according to item 1, wherein the compaction is conducted under a pressure from about 100 to about 280 bar.

3. The method according to item 1 or 2, wherein the compacted composition is comminuted to provide particles having a size from about 0.1 to about 10 mm.

4. The method according to any of items 1 to 3, wherein the compacted composition or the particles are washed in order to reduce their sulfate content.

5. A method of preparing an adsorbent comprising schwertmannite, wherein the method comprises the following steps:

(a) providing a composition comprising schwertmannite;
(b) mixing the composition with an organic polymer or a precursor of an organic polymer to provide a mixed composition;
(c) solidifying or curing the organic polymer or the precursor to provide a solidified or cured composition.

6. The method according to item 5, wherein the composition comprising schwertmannite further comprises from about 0 to about 50 wt.-% water.

7. The method according to item 5 or 6, wherein the ratio of organic polymer to schwertmannite is from about 4 /100 to about 20 / 100 on a weight basis.

8. The method according to any of items 5 to 7, wherein the organic polymer possesses at least one acidic group which is preferably selected from carboxylic acid groups, derivatives thereof and combinations thereof.

9. The method according to any of items 5 to 8, wherein the organic polymer or the precursor comprises an acrylic acid ester group and/or a carboxylic acid ester group as an acidic group.

10. The method according to any of items 5 to 9, wherein the curing is conducted by a thermal treatment comprising a low temperature step in which the mixture is heated at a temperature from about 35 °C to about 85 °C for about 3 to about 24 hours and a high temperature step in which the mixture is heated at a temperature from about 85 °C to about 220 °C for about 1 to about 3 hours.

11. The method according to any of items 5 to 10, wherein the solidified or cured composition is comminuted to provide particles having a size from about 0.1 to about 10 mm.

12. The method according to any of items 5 to 11, wherein the solidified or cured composition or the particles are washed in order to reduce their sulfate content.

13. A method of preparing an adsorbent comprising schwertmannite, wherein the method comprises the following steps:

(A) providing a composition comprising schwertmannite;
(B) mixing the composition with an organic polymer or a precursor of an organic polymer to provide a mixed composition;
(C) compacting the mixed composition to provide a compacted composition.

14. The method according to item 13, wherein the composition comprising schwertmannite further comprises water and the water content is from about 7.5 to about 25 wt.-%.

15. The method according to item 13 or 14, wherein the ratio of organic polymer to schwertmannite is from about 4 / 100 to about 20 / 100 on a weight basis.

16. The method according to any of items 13 to 15, wherein the organic polymer possesses at least one acidic group which is preferably selected from carboxylic acid groups, derivatives thereof and combinations thereof.

17. The method according to any of items 13 to 16, wherein the organic polymer or the precursor comprises an acrylic acid ester group and/or a carboxylic acid ester group as an acidic group.

18. The method according to any of items 13 to 17, wherein the compacted composition is further subjected to solidification or curing.

19. The method according to item 18, wherein the curing is conducted by a thermal treatment comprising a low temperature step in which the mixture is heated at a temperature from about 50 °C to about 100 °C for about 3 to about 10 hours and a high temperature step in which the mixture is heated at a temperature from about 85 °C to about 200 °C for about 1 to about 3 hours.

20. The method according to any of items 13 to 19, wherein the compacted or solidified or cured composition is comminuted to provide particles having a size from about 0.1 to about 10 mm.

21. The method according to any of items 13 to 20, wherein the compacted or solidified or cured composition or the particles are washed in order to reduce their sulfate content.

22. The method according to any of items 13 to 21, wherein the compaction is conducted under a pressure from about 100 bar to about 280 bar.

23. An adsorbent obtainable by the method according to any of items 1 to 22.

24. A method of purifying a liquid comprising the step of contacting the adsorbent according to item 23 with the liquid.

25. The method according to item 24, wherein a compound comprising an element selected from the group consisting of S, Se, Te, P, As, Sb, Bi, Pb, Cs, a transition metal, lanthanide or actinide, including Cr, Mo, U, Ra, Ni, Yb, V, Cd, or Hg, is removed from the liquid.

26. A method of purifying gas comprising the step of contacting the adsorbent according to item 23 with the gas.

27. The method according to item 26, wherein hydrogen sulfide or hydrogen cyanide is removed from the gas.

28. The method according to any of items 24 to 27, wherein the adsorbent is provided in a fixed bed.

29. The method according to item 26 or 27, wherein the adsorbent is provided in a fluidized bed.

30. Use of schwertmannite for the purification of biogas which contains hydrogen sulfide.

31. The use according to item 30, wherein the schwertmannite is first contacted with a phosphate-containing solution and is subsequently contacted with the biogas.

**Brief description of the figures**

Figure 1a:   Schwertmannite formation on supports in the pilot plant, Tzschelln (Lausitz, Germany).
Figure 1b:   Scanning electron microscope photograph of the schwertmannite formed in the pilot plant, Tzschelln (Lausitz, Germany).
Figure 2:   Schwertmannite composition gushing from the press.

Figure 3a: Schwertmannite compositions having 10 wt.-% water which were pressed at various pressures.
Figure 3b: Chip formation.
Figure 4: Arsenate adsorption kinetics of schwertmannite adsorbents (top) and iron hydroxide adsorbents (bottom).
Figure 5: Small-scaled columns to investigate the long-term stability of schwertmannite adsorbents under flow conditions.
Figure 6: Photograph and scanning electron microscopic picture of the adsorbents S5-039 (Figure 6a) and S5-044 (Figure 6b).

**Detailed description of the invention**

As can be seen from Figure 1b, schwertmannite has a fine needle-like structure which contributes to its high surface area and thus adsorption properties. It was previously assumed that this structure must be preserved in order to maintain the desired adsorption properties. Therefore, schwertmannite was either employed as a powder or was directly formed on carriers in the prior art. The present inventors have surprisingly found that schwertmannite can be incorporated into an adsorbent by compaction and/or by mixing with an organic polymer without impairing its adsorption properties.

The schwertmannite which can be used in the present invention is not particularly restricted. It can be any type of schwertmannite regardless of whether it is naturally occurring schwertmannite, schwertmannite obtained from mine drainage or synthesized schwertmannite. Schwertmannite which is obtained as a by-product of the biotechnological treatment of process waters from lignite mining is preferred because of its low costs and high availability.

Compaction method

According to a first embodiment, the present invention relates to a method in which schwertmannite is incorporated into an adsorbent by compaction. In particular, this method comprises the following steps:

(i) providing a composition comprising schwertmannite and water, wherein the water content of the composition is from about 7.5 to about 25 wt.-%; and
(ii) compacting the composition to provide a compacted composition.

In a first step (i) a composition comprising (preferably consisting of) schwertmannite and water is provided. The water content of the composition is from about 7.5 to about 25 wt.-%, preferably from about 10 to about 15 wt.-%. The water content of the composition can be determined by drying according to the following equation:

$$\text{water content} = \frac{(m_{total} - m_{dry})}{m_{dry}} = \frac{m_{water}}{m_{dry}}$$

with
$m_{water}$ weight of water
$m_{total}$ weight of the wet sample
$m_{dry}$ weight of the dried sample

It was surprisingly found that the water content must be in the above-mentioned range. If the water content is below 7.5 wt.-%, the composition comprising schwertmannite and water is a very dusty powder which does not adhere together. If, however, the water content is above 25 wt.-%, the composition exhibits thixotropic behaviour. Therefore, if such a composition is compacted, the viscosity decreases significantly when pressure is applied during compaction and the composition flows out of the compaction apparatus.

In contrast to other mixtures containing a solid and water, the water is not squeezed out of the inventive composition when pressure is applied but is retained in the composition which has the appearance of a paste

The composition comprising schwertmannite and water can be compacted by any suitable method. All methods with which samples in powder form can be pressed can be used in the present invention. Examples of possible compaction devices include a briquette press, a pellet press or a tabletting device.. Preferably compaction is conducted using a briquette press.

The pressure which is applied during the compaction step is not particularly restricted. However, it is preferably in the range of from about 100 bar to about 280 bar, more preferably from about 130 bar to about 230 bar, in order to obtain a filter stable product.

The filter stability and abrasion resistance can also be improved by controlling the pressure profile. The pressure is preferably increased from ambient pressure to the maximum pressure within at least about 2 s, preferably at least about 5 s. The maximum duration of this step is less important. Generally, the time will be up to about 2 min, preferably up to about 1 s, more preferably up to about 30 s. The pressure can be increased in a stepwise or continuous manner. The maximum pressure is preferably maintained for about 0.5 s to about 4 s, more preferably about 1 s to about 2 s. Then the pressure is reduced from the maximum pressure to ambient pressure within about 0.5 s to about 5 s, more preferably about 1 s to about 2 s. The pressure can be decreased in a stepwise or continuous manner. Subsequently, the compacted composition is removed from the compaction device.

The amount of material which is compacted can influence the homogeneity of the obtained compacted composition. The optimum amount will depend on the compaction device which is employed. It will typically be in the range of about 100 g to about 1000 g, more typically about 250 g to about 500 g. Generally, lower amounts of material result in a more homogeneous compacted composition. In addition, smaller samples can be preferred because they do not have to be reduced in size or less work is needed to reduce their size later on during processing.

The size of the compacted composition will depend on the compaction device. If the compacted composition has a size which is suitable for the desired end use, it can be used without further processing. However, typical compaction devices will usually provide a compacted composition which is too large. In these cases, the compacted composition can be comminuted before use. Comminution can be conducted by any suitable means such as a hammer mill, rotary mill, cutting mill, granulator, roll mill, vertical mill, and the like. Those mills which allow the size of the resultant particles to be set in a desired range such as a cutting mill or a roll mill are preferred. The size of the particles which are obtained after comminution will depend on the desired end use. Typically, the size will be at least about 0.1 mm, preferably at least about 1 mm. The maximum size is not particularly restricted and can be up to about 10 mm, more typically up to about 3 mm. The size of the particles is, e.g., determined by sieving.

The compacted composition or the particles can be optionally washed. Washing can be conducted by contacting the compacted composition or the particles with water or an aqueous solution. Washing will be typically conducted at ambient temperature. The washing step reduces the sulfate content of the compacted composition or the particles. This is advantageous because the sulfate load of the treated water is reduced. Furthermore, the release of superficially bound sulfate promotes the disagglomeration of schwertmannite particles and thereby increases the surface area and sorption sites, respectively.

Binder method:

According to a second embodiment, the present invention relates to a method of preparing an adsorbent comprising schwertmannite, wherein the method comprises the following steps:

(a) providing a composition comprising schwertmannite;
(b) mixing the composition with an organic polymer or a precursor of an organic polymer to provide a mixed composition;
(c) solidifying or curing the organic polymer or the precursor to provide a solidified or cured composition.

In a first step (a) a composition comprising schwertmannite is provided, which is subsequently mixed with an organic polymer or a precursor of an organic polymer in step (b). In addition to schwertmannite the composition can further comprise water. If present, water will be typically contained in the composition in an amount from about 7.5 to about 25 wt.-% water, more typically from about 10 to about 15 wt.-% water. The desired water content can be obtained by drying the initial schwertmannite to the desired residual water content.

In the present specification, a "precursor of an organic polymer" means, e.g., a monomer or a mixture of monomers which can be polymerized or copolymerized to provide an organic polymer.

The ratio of organic polymer to schwertmannite is preferably from about 4 / 100 to about 60 /100, more preferably about 4 / 100 to about 20 / 100 on a solid weight basis. If the ratio is too high, the amount of binder is insufficient to bind the schwertmannite. If on the other hand the ratio is too low, the binder covers the actives sites of the schwertmannite and thus reduces its adsorption capacity.

The organic polymer is not particularly limited and can be any suitable polymer. It preferably possesses at least one acidic group which is, for instance, selected from carboxylic acid groups, derivatives thereof and combinations thereof. Preferred organic polymers or the precursors thereof comprise an acrylic acid ester group and/or a carboxylic acid ester group as an acidic group. It is also preferred that the organic polymer is crosslinkable.

In one embodiment, the mixed composition consists of schwertmannite and the organic polymer or a precursor thereof. In another embodiment, the mixed composition consists of schwertmannite, water and the organic polymer or a precursor thereof.

After the mixing step, the mixed composition is solidified or cured to provide a solidified or cured composition. In the present specification, curing means that a chemical reaction takes place between the molecules of the organic polymer or of the precursor. Therefore, the term "curing" includes polymerization reactions. In the present specification, solidification means that the organic polymer is transformed from a liquid to a solid state without a chemical reaction taking place. This can be achieved, e.g., by evaporation of a solvent or cooling under the melting point.

Whether curing or solidification will be conducted will depend on a variety of factors. If, for example, a precursor is present, then curing will be typically conducted. If an organic polymer is present, then either curing or solidification can be chosen. This will typically depend on the specific polymer chosen and can be conducted by a skilled person based on his chemical knowledge in the field.

Curing can be conducted by a thermal treatment comprising a low temperature step in which the mixture is heated at a temperature from about 35 °C to about 85 °C for about 3 to about 24 hours and a high temperature step in which the mixture is heated at a temperature from about 85 °C to about 220 °C; preferably from about 120 °C to about 220 °C, for about 1 to about 3 hours.

If the composition obtained in step (c) has a size which is suitable for the desired end use, it can be used without further processing. However, the size of the composition will be typically too large. In these cases, the composition can be comminuted before use. Comminution can be conducted by any suitable means such as a hammer mill, rotary mill, cutting mill, granulator, roll mill, vertical mill, and the like. Those mills which allow the size of the resultant particles to be set in a desired range such as a cutting mill or a roll mill are preferred. The size of the particles which are obtained after comminution will depend on the desired end use. Typically, the size will be at least about 0.1 mm, preferably at least about 1 mm. The maximum size is not particularly restricted and can be up to about 10 mm, more typically up to about 3 mm. The size of the particles is, e.g., determined by sieving.

The composition or the particles can be optionally washed. Washing can be conducted by contacting the composition or the particles with water or an aqueous solution. Washing will be typically conducted at ambient temperature. The washing step reduces the sulfate content of the composition or the particles. This is advantageous because the sulfate load of the treated water is reduced. Furthermore, the release of superficially bound sulfate promotes the disagglomeration of schwertmannite particles and thereby increases the surface area and sorption sites, respectively.

Combined method

The combined method is a combination of the compaction method and the binder method. This method comprises the following steps:

(A) providing a composition comprising schwertmannite;
(B) mixing the schwertmannite with an organic polymer or a precursor of an organic polymer to provide a composition;
(C) compacting the composition to provide a compacted composition.

With respect to the components and the individual steps, reference is made to the compaction method and the binder method discussed above.

The adsorbents obtained by the methods according to the present invention can be used for purifying liquids or gases. They can be used to treat any of the contaminants which have been previously treated using schwertmannite powder or other forms of schwertmannite. Examples of such contaminants are compounds (particularly oxoanions) comprising an element selected from the group consisting of S, Se, Te, P, As, Sb, Bi, Pb, Cs, a transition metal, lanthanide or actinide, including Cr, Mo, U, Ra, Ni, Yb, V, Cd, or Hg. The invention is particularly suitable for removing arsenic compounds.

In one embodiment, the adsorbents according to the present invention can be used to remove a compound comprising Se, Te, As, Sb, Bi, Pb, Cs, a transition metal, lanthanide or actinide, including Cr, Mo, U, Ra, Ni, Yb, Cd, or Hg, from a liquid or gas. The adsorbents according to the present invention are also useful in removing anions such as phosphate from liquids. In one preferred embodiment, phosphate can be retrieved.

In a further preferred embodiment, the adsorbents can be used to remove hydrogen sulfide or hydrogen cyanide from a gas, for example, hydrogen sulfide from biogas.

The type of liquid to be treated is not particularly restricted. Typically, it will be water or an aqueous solution. Examples of possible liquids include industrial or mining process effluents or municipal sewage.

In one embodiment, schwertmannite can be used for the purification of biogas by the oxidation of its hydrogen sulfide content. In a first step, schwertmannite can be used for adsorbing phosphate from a solution such as waste water. It is subsequently contacted with biogas. In this step, the ferric iron (Fe(III)) of schwertmannite will be reduced to ferrous iron (Fe(II)) and the phosphate-containing schwertmannite will reduce, so that the adsorbed phosphate will be redissolved. During an optional second treatment step, phosphate can be precipitated (for example, by addition of calcium to precipitated apatite) and will thereby be recycled. Because of the world wide decreasing natural phosphate resources, recycling technologies for this essential nutrient became more and more attractive. The schwertmannite, which is employed in this embodiment, is not particularly restricted and can be any type of schwertmannite. Although the specific forms of schwertmannites which are disclosed in this application are preferred, any of the previously known types of schwertmannite such as schwertmannite in powder form can be used.

In order to remove the contaminants from the contaminated liquid or gas, the adsorbents have to be contacted with the liquid or gas. This contacting can be conducted by any suitable method and will depend on the nature of the sample. In preferred embodiments, the adsorbent is provided in a fixed bed or a fluidized bed. The adsorbents of the present invention are particularly suitable for such applications because they are filter stable. This allows them to be used in passive water treatment which is much less labour- and cost-intensive then conventional methods using, e.g., schwertmannite in powder form.

Furthermore, the adsorbents retain the adsorbed contaminants and do not substantially release them even under the conditions expected under permanent contact with groundwater or in a landfill.

## EXAMPLES

Measuring methods

The $SO_4$ release and the equilibrium pH values of the compositions comprising schwertmannite were determined by shaking 10 g schwertmannite with 100 mL tap water using a benchtop shaker at 130 rpm for four hours. The amount of $SO_4$ was then measured using an ion chromatograph Dionex DX 120. The pH value was measured using a WTW pH meter.

The specific surface area (BET) and pore size distribution of the compositions comprising schwertmannite were measured by $N_2$ adsorption using an Autosorb C device (Quantachrome GmbH & Co. KG) after drying the compositions at 30°C.

To adjust the water content of the compositions comprising schwertmannite before compacting, the compositions were dried at 60°C for 24 hours. Following that, the appropriate amount of water was added.

The point of zero charge of schwertmannite and selected schwertmannite adsorbents was determined by a ZetaSizer Nano device (Malvern Instruments GmbH) using 0.1 M $NaNO_3$ and 100 mg sample/L. The pH values were adjusted by addition of diluted HCl or NaOH.

**Determination of As**

Arsenite (As(III)) was added in the form of $NaAsO_2$ and arsenate (As(V)) was added in the form of $Na_2HAsO_4$ in all of the experiments. The As concentration was determined using graphite tube atomic adsorption spectrometry (AAS SIMAA 6000, Perkin-Elmer).

**Determination of sulfate**

Sulfate was determined using an ion chromatograph Dionex DX 120.

**Abrasive wear**

The abrasive wear of the adsorbents was determined in a shaking experiment. In these experiments 10 g of the adsorbent and 100 ml water were shaken by a benchtop shaker at 130 rpm for four hours. The amount of abrasive wear was determined after drying the residual adsorbent at 60°C, subsequently sieving using a sieve having 1 mm mesh size and weighing the fractions.

Example 1:

In an initial experiment, the general properties of various mixtures of schwertmannite and water were investigated. Schwertmannite powder having a water content of approximately 50 wt.-% was obtained from the pilot plant in Tzschelln (Lusatia brown coal mining district). This powder was dried at 60 °C, thereafter the desired water content was adjusted.

(i) Schwertmannite powder was completely dried. The powder was very dusty and did not adhere together.

(ii) Schwertmannite powder having a water content of 5 wt.-% was prepared. The powder was very similar to the completely dry powder.

(iii) Schwertmannite powder having water contents of 15 wt.-% and 30 wt.-% was prepared. The particles adhered to each other during mixing.

Example 2:

The schwertmannite powders having water contents of 0 wt-%, 15 wt-% and 30 wt.-% were compacted in two presses. Press 1 was a briquette press Brix Star M from Höcker Polytechnik (Germany). This press continuously increases the pressure to the maximum pressure set and subsequently continuously decreases the pressure. Press 2 was press Brix Star MD from Höcker Polytechnik (Germany). This press can be programmed, so that the pressure can be increased or decreased either continuously or in up to 10 separate steps.

The pressure was increased slowly up to a maximal pressure of 260 bar which was held for 10 s.

In the initial experiments, 800 g of composition were compacted.

When the dry schwertmannite powder (0 wt.-% water) was compacted, a pellet having a low cohesion was obtained.

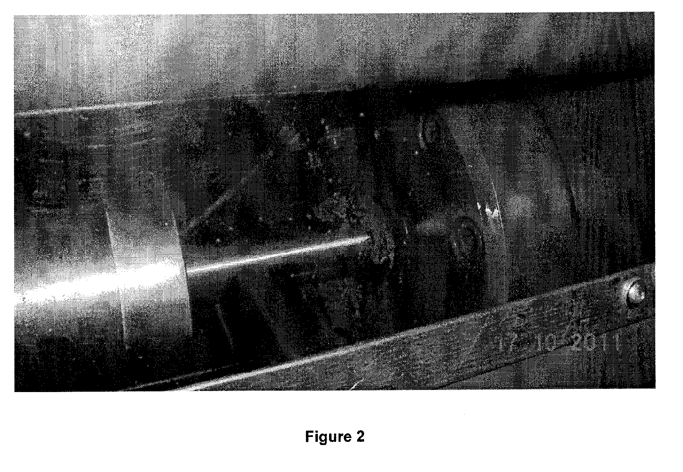

When the composition containing schwertmannite and 30 wt.-% water was compacted, material suddenly exited from the press when a certain pressure was exceeded (Figure 2). The same behaviour was observed when the compaction conditions were modified by increasing the pressure very slowly or by increasing the pressure in a stepwise manner. Without wishing to be bound by theory, it is assumed that the composition having 30 wt.-% water has thixotropic properties and that the viscosity is significantly reduced when high shear is applied. It is further assumed that the rheological yield point is exceeded at a certain pressure which results in the schwertmannite composition gushing out of the press.

The behaviour of the composition containing schwertmannite and 15 wt.-% water was completely different than the behaviour of the composition containing 30 wt.-% water. Again the behaviour was unexpected.

In press 1, brittle pellets with some soft spots were obtained. The pellets obtained with press 2 had a more homogeneous structure and were hard and brittle.

In order to investigate the influence of the amount of the composition, the amount was reduced from 800 g to 250 g. The resultant pellets were harder and more homogeneous.

The brittleness of the pellets was not detrimental because they had to be comminuted before use as an adsorbent.

Example 3:

300 g of a schwertmannite composition containing 10 wt.-% water were pressed in press 2 whereby the pressure was increased to the maximum pressure during 20 s and the maximum pressure was maintained for 1 s. The maximum pressure was varied as set out in the Table 1.

Table 1:

| Maximum pressure [bar] | Properties of the resultant pellet |
| --- | --- |
| 260 | very hard, friable, dark shiny surface |
| 220 | very hard, brittle, separated into chips |
| 180 | hard, matte, dark with light coloured streaks on the surface |
| 140 | softer, lighter, no cracks |

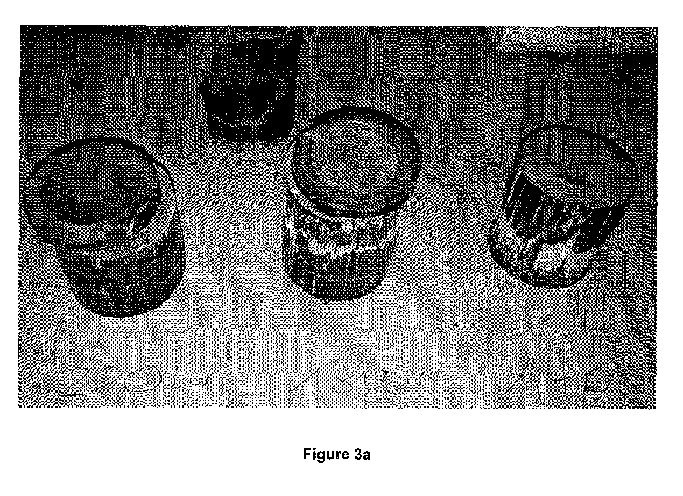

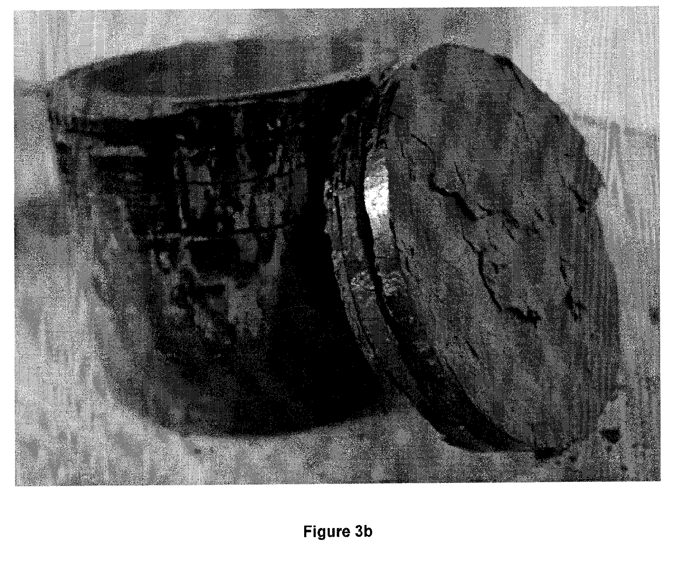

A photograph showing the resultant pellets is shown in Figure 3a. A larger photograph showing the "chip" formation is given in Figure 3b.

Example 4:

300 g of a schwertmannite composition containing 20 wt.-% water were pressed in press 2 whereby the pressure was increased to the maximum pressure during 20 s and the maximum pressure was maintained for 1 s. The maximum pressure was 140 and 160 bar. The resultant pellets were crumbly and resulted in light coloured pieces.

Example 5:

During a first test series, different groups of binders were investigated. The abrasive wear of a number of the adsorbents, their sulfate release and equilibrium pH values as well as their specific surface area (BET) before adsorption were determined.

The adsorbents were formed by mixing dry schwertmannite with the binder, drying at room temperature and subsequently comminuting the formed mass to particles having a size of 1 to 3 mm using a hammer. When Fe(III) sulfate was used as a binder, NaOH was simultaneously added to control the pH-value to 5.0. This resulted in precipitation of $Fe(OH)_3$, the actual binder for the schwertmannite. When oils were used as a binder, the schwertmannite was dried to a water content of 25 wt.-% and the samples were compacted manually. Before use, the oil-containing adsorbents were aged under ambient conditions for 42 days which improved their stability and abrasive wear.

Table 2:

| Binder | Adsorbent | Binder / preparation (wt-% dry matter) | abrasive wear [wt.-%] | eq. PH* | BET surface area [$m^2$/g] | |
|---|---|---|---|---|---|---|
| | | | | | before adsorption | after adsorption |
| $Fe(III)SO_4$ | SHM-03 | 8 wt-% Fe(III) $SO_4$ | 90 | ≈3 | 41 | 206 |
| Oil | SHM-09 | 23 wt-% linseed oil | 12 | ≈3 | 2 | 51 |
| | SHM-10 | 23 wt-% sunflower oil | 14 | =3 | 1 | 37 |
| Geopolymer | SHM-15 | 71 wt-% Geopolymer L160, bulk (TetraNorm) | 22 | ≈11 | 42 | 96 |
| | SHM-16 | 71 wt-% Geopolymer L160, foam (TetraNorm) | 26 | ≈11 | 7.6 | 65 |
| Cement | SHM-19 | 57 wt-% Portland cement, bulk | 13 | ≈11 | 26 | 80 |
| | SHM-22 | 56 wt-% Portland cement, foam | 28 | ≈11 | 54 | 135 |
| | SHM-26 | 56 wt-% blast-furnace cement, foam | 39 | ≈11 | 60 | 125 |
| Nanosol | SHM-37 | 15 wt-% Binzil 1440 (Nanosol) | 31 | =3 | 98 | 155 |

(continued)

| Binder | Adsorbent | Binder / preparation (wt-% dry matter) | abrasive wear [wt.-%] | eq. PH* | BET surface area [m²/g] | |
|---|---|---|---|---|---|---|
| | | | | | before adsorption | after adsorption |
| organic polymers | SHM-01 | 4 wt-% Latex binder VINNAPAS EPN 865 (Wacker) | 80 | ≈3 | 13 | 195 |
| | SHM-39 | 8 wt-% Latex binder VINNAPAS EPN 865 (Wacker) | 11 | ≈3 | 7.2 | 144 |
| | SHM-40 | 12wt-% Latex binder VINNAPAS EPN 865 (Wacker) | 12 | ≈3 | 5.6 | 91 |
| | SHM-49 | 16wt-% adhesive Acrodur DS 3515 (BASF) | 63 | ≈3 | 43 | 187 |
| no binder (only compaction) | SHM-11 | compaction to pellets (1100 bar) without binder | 15 | ≈3 | 8 | 167 |
| | SHM-44 | compaction to pellets (260 bar) without binder | 24 | ≈3 | 28 | 268 |
| | SHM-57 | 4% Latex binder VINNAPAS EPN 865 (Wacker) and compaction to pellets (140bar) without binder | 18 | ≈3 | 5 | 13 |
| *eq. pH = equilibrium pH | | | | | | |

The results of the experiments are given in Table 2. It can be seen that binders like $Fe(III)SO_4$, cement or geopolymer did not crosslink effectively and very high binder amounts were needed for crosslinking, respectively. The use of oils as a binder reduced the surface area significantly. Cement addition resulted in strongly basic pH values in equilibrium solution. In contrast to that, the addition of an organic polymer like a latex binder in concentrations of 8 to 12 wt.-% resulted in a low abrasive wear (11 to 12 wt.-%). Compacted pellets without a binder exhibited minor abrasive wear (15 and 24 wt.-%). The stability of the adsorbents obtained with latex increased with increasing binder content and compaction pressure, respectively. However, an increased binder content reduced the schwertmannite content and thereby the capacity for removing contaminants. Furthermore, higher latex binder contents or increasing compaction pressure resulted in a decrease of the BET surface area as illustrated by the values after adsorption. It is assumed that the high abrasive wear of SHM-49 is due to insufficient crosslinking. This can be easily adjusted by chosing more appropriate conditions.

Example 6:

The capacity of selected adsorbents tested in example 5 (SHM-039, SHM-11, SHM-44, SHM-49 and for a comparision also SHM-26) for removing arsenate (As(V)) and arsenite (As(III)) from water in different test series was investigated. All schwertmannite adsorbent samples were washed with deionized water, redried at 35°C and sieved to 1-2 mesh size before use. An untreated, original schwertmannite sample (SHM-0), commercially available iron hydroxide adsorbents (Bayoxide® E 33 HC from LANXESS GmbH, GEH®104 from GEH Wasserchemie & Co. KG and FerroSorp®Plus from HeGo Biotec GmbH) as well as an iron hydroxide sludge sample from a water treatment plant (Lusatia) were investigated in parallel tests.

For each adsorbent, five bottles containing 250 mL of tap water which contained 10 mg/L As(III) or As(V) were prepared and five different amounts of schwertmannite adsorbent were added (0.1 g/L, 0.2 g/L, 0.4 g/L, 0.8 g/L or 1.6 g/L). The samples were shaken continuously. In two test series, the pH was buffered to pH 7.5 using 1 M NaOH or HCl, two tests series were performed without pH buffering. After the equilibrium concentration had been achieved between the solution and the solid (between 2 and 6 weeks), the arsenic concentration of the supernatant was determined by AAS (Perkin Elmer) after the sample had been filtered using a filter having a pore size of 0.2 $\mu$m. The results are summarized in Tables 3 and 4.

Compared to the original untreated schwertmannite sample SHM-0, the high binder content of SHM-26 and the high pressure compaction of SHM-11 decreased the adsorption capacity of As(III). Higher adsorption capacities were reached in the tests series with As(V), especially without pH buffering. As(V) forms oxoanions in aqueous systems ($H_2AsO_4^-$ or $HAsO_4^{2-}$). A possible scavenging mechanism might be the adsorption of these oxoanions onto reactive schwertmannite surfaces. Oxoanions tend to adsorb more efficiently at pH values below the point of zero charge (pzc) of the adsorbents. For schwertmannite, a pzc between pH 6.8 and 7.2 was determined. Due to proton release during the hydrolysis of schwertmannite, the advantageous positive surface charge will adjust itself. Similar high adsorption capacities of SHM-39, SHM-49 and SHM-44 were determined in the unbuffered As(III) test. However, the maximal adsorption capacity in these tests was reached after a long time, so that it can be assumed that As(III) was oxidized to As(V) during this time. The release of superficially bounded sulfate and the transformation of schwertmannite to highly amorphous ferrihydrite is another possible scavenging mechanism. Amorphous iron hydroxides can coprecipitate or adsorb arsenate very effectively.

All tests with iron hydroxide adsorbents were buffered to pH 7.5. However, the release of hydroxide ions was low, whereas the equilibrium pH value without buffering is assumed to adjust itself between pH 7 and pH 8. As shown by the comparison with the schwertmannite adsorbents SHM-39, SHM-49 and SHM-44, significantly lower adsorption capacities for the oxoanion As(V) were determined for all iron hydroxide adsorbents.

Additional tests with pure binders (latex, Acronal, cement) were performed. None of the pure binders exhibited any significant adsorption of As.

Table 6: Arsenic adsorption capacities of different schwertmannite adsorbents [mg As/g adsorbent]

| adsorbent/ binder<br><br>test series | | SHM-0<br><br>none | SHM-26<br><br>56 wt-% blast-furnance cement | SHM-39<br><br>8 wt-% latex binder | SHM-49<br><br>15% adhesive Acrodur DS | SHM-11<br><br>None (compaction at 1100 bar) | SHM-44<br><br>None (compaction at 260 bar) |
|---|---|---|---|---|---|---|---|
| As(III) | buffered (pH $q_{max}$) | 39.4 (pH 7.5) | 18.8 (pH 7.5) | 29.8 (pH 7.5) | 35.7 (pH 7.5) | 15.5 (pH 7.5) | 27.5 (pH 7.5) |
| | unbuffered (pH $q_{max}$) | — | — | 64.8 (pH 6.6) | 56.8 (pH 6.6) | — | 42.0 (pH 6.7) |
| As(V) | buffered (pH $q_{max}$) | — | — | 50.7 (pH 7.5) | 37.5 (pH 7.5) | — | 25.6 (pH 7.5) |
| | unbuffered (pH $q_{max}$) | — | — | 60.3 (pH 6.8) | 55.8 (pH 6.7) | — | 37.6 (pH 6.8) |

Table 7: Arsenic adsorption capacities of iron hydroxide-based adsorbents [mg As/g adsorbent]

| adsorbent / test series | | Fe(OH)$_3$(a) sludge | Ferrosorp®Plus (HeGoBiotec GmbH) | GEH® 104 (GEH Wasserchemie GmbH) | Bayoxide® E33 HCF (Lanxess GmbH) |
|---|---|---|---|---|---|
| As(III) | buffered to pH 7.5 | 22.6 | 28.9 | 18.6 | 18.3 |
| As(V) | | — | 40.1 | 33.2 | 21.1 |

The binder of the adsorbent SHM-49, Acrodur® DS 3515 (BASF AG) is an aqueous styrenic acrylate dispersion modified by polycarbonic acid and a polyvalent alcohol as crosslinking component. The binder of the adsorbent SHM-39, VINNAPAS® EPN 865 (Wacker Chemie  AG) is an aqueous polymeric dispersion containing the monomers vinyl acetate and ethylene. Both polymers should be self-crosslinking above 130°C. With regard to the conditions used for the preparation of SHM-39 and SHM-39, the tempering procedure was performed at 120 °C for one hour. Therefore, the temperature may have been too low for efficient crosslinking of SHM-49

Example 7:

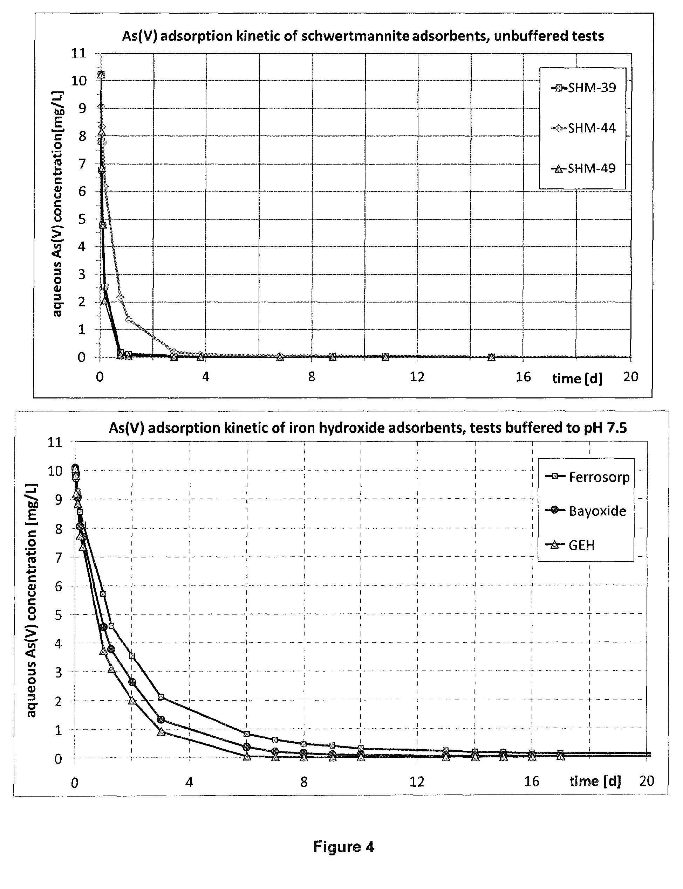

The kinetics of arsenate and arsenite elimination by the schwertmannite adsorbents and the iron hydroxide adsorbents from example 6 were investigated. All schwertmannite adsorbent samples were washed with deionized water, redried at 35 °C and sieved to 1-2 mesh size before use. For each adsorbent, 500 mL of tap water which contained 5 mg/L or 10 mg/L As(III) and As(V), respectively, were equilibrated with 0.8 g adsorbent (1.6 g adsorbent/L). The samples were shaken continuously using a benchtop shaker at 130 rpm. After certain time intervals, the pH value of the aqueous phase was measured and samples for arsenic analysis were collected. These samples were filtered using a 0.2 $\mu$m syringe filter and acidified with 1% HNO$_3$. The results are summarized in Tables 5 and 6.
In general, for all schwertmannite adsorbents the elimination of arsenite was not as fast as the elimination of arsenate (Table 5). The lowest adsorption kinetics of arsenite were observed without pH buffering. This might be caused by the slow oxidation kinetics of As(III) to As(V) at low pH values. Compared to the adsorption kinetics of the oxoanion arsenate on iron hydroxide adsorbents, the adsorption kinetics of SHM-39 (8 wt-% latex binder), SHM-49 (16 wt-% Acrodur DS) and SHM-44 (compacted composition) were significantly higher (Figures 4a and 4b). The most effective iron hydroxide adsorbent Ferrosorp® Plus, which has an adsorption capacity of 40.1 mg As(V)/g adsorbent, showed the slowest adsorption kinetics. In water treatment, faster adsorption kinetics will provide a higher volume flow in passive filter bed systems filled with schwertmannite adsorbents.
With respect to the release of protons due to schwertmannite hydrolysis, a buffering of the low pH values in the effluent of filter bed systems with schwertmannite can be necessary. For this purpose, a second filter bed filled with limestone can be used to neutralize pH values.

Table 5: Adsorption kinetics of schwertmannite adsorbents for As(III) and As(V)

| Adsorbent / binder | SHM-0 / none | SHM-26 / 56 wt-% blast furnance cement | SHM-39 / 8 wt-% latex binder | SHM-49 / 15% adhesive Acrodur DS | SHM-11 / None (compaction at 1100 bar) | SHM-44 / None (compaction at 260 bar) |
|---|---|---|---|---|---|---|
| 99% elimination of **5 mg As(III)/L (buffered** to pH 7.5) after | 0.98 d | 18.9 d | 14.9 d | 6.0 d | 10.8 d | 6.3 d |
| 99% elimination of **10 mg As(III) /L (unbuffered)** after | - | - | >97 d (pH=3.5) | >97 d (pH≈3.5) | - | 50 d (pH 3.3) |

(continued)

| Adsorbent | SHM-0 | SHM-26 | SHM-39 | SHM-49 | SHM-11 | SHM-44 |
|---|---|---|---|---|---|---|
| binder | none | 56 wt-% blast furnace cement | 8 wt-% latex binder | 15% adhesive Acrodur DS | None (compaction at 1100 bar) | None (compaction at 260 bar) |
| 99% elimination of **10 mg As (V) /L (buffered to pH 7.5) after** | - | - | 6.0 d | 6.0 d | - | 8.0 d |
| 99% elimination of **10 mg As(V) /L (unbuffered) after** | - | - | 2.8 d (pH 3.9) | 0.8 d (pH 3.9) | - | 3.8 d (pH 3.6) |

Table 6: Adsorption kinetics of iron hydroxide adsorbents for As(III) and As(V)

| Adsorbent | Fe(OH)$_{3(a)}$ sludge | Ferrosorp®Plus | GEH®104 | Bayoxide®E33HC |
|---|---|---|---|---|
| 99% elimination of **5 mg As(III)/L (buffered to pH 7.5) after** | 13.8 d | 9.9 d | 6.0 d | 6.0 d |
| 99% elimination of **10 mg As(V)/L (buffered to pH 7.5) after** | - | 34 d | 6.0 d | 9.0 d |

Example 8:

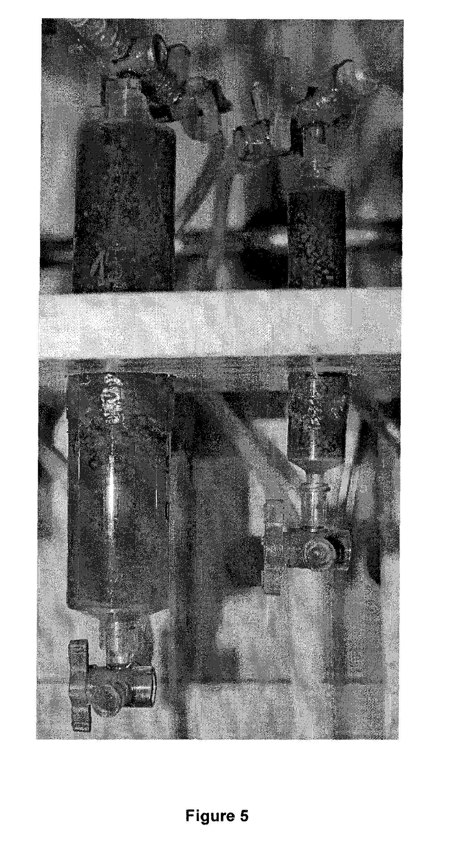

Based on the results of batch experiments (examples 5 to 7), the schwertmannite adsorbents SHM-39, SHM-44, SHM-49 and the basic adsorbent SHM-26 as a comparison were investigated in small-scale column experiments (1.3 cm in diameter and 6.6 cm in length) in order to estimate their long term stability under flow conditions (Fig. 5). Depending on the grain density of the various schwertmannite adsorbents (2.5 to 3.3 g adsorbent/cm$^3$), between 5.4 and 9.9 g adsorbent were filled in a column. The flow volume was adjusted to 60 to 65 mL/d, whereas about 9 filter bed volumes were replaced per day. The inflowing water was spiked with 25 mg As(III)/L as NaAsO$_2$. The breakthrough critera for the filter bed systems was defined by excessing an effluent arsenic concentration of 60 μg/L, which is the upper threshold value for remediation actions prescribed by the Federal States on Water Issues (LAWA, 1994). The arsenic concentrations were measured after sample filtration by 0.2 μm syringe filters and acidification with 1% HNO$_3$ by AAS (SIMAA 6000, Perkin-Elmer).

Table 7: Filter bed breakthrough defined by excessing an effluent concentration of 60 μg As/L

| Column | schwertmannite content of the adsorbent [g] | replaced filter bed volumes | effluent pH-value | arsenic adsorption capacity [mg As/g adsorbent] |
|---|---|---|---|---|
| **SHM-26** | 2.8 of 6.3 | 140 | 7.9 | 1.5 (8% of q$_{max}$*) |
| **SHM-39** | 4.9 of 5.4 | 1350 | 7.7 | 41.5 (64% of q$_{max}$**) |
| **SHM-49** | 4.7 of 5.6 | 930 | 6.8 | 28.4 (50% of q$_{max}$**) |
| **SHM-44** | 9.9 | 2050 | 7.2 | 35 (83 % of q$_{max}$**) |
| * q$_{max}$... adsorption capacity for As(III) in a test buffered to pH 7.5 ** q$_{max}$... adsorption capacity for As(III) in tests without pH buffering | | | | |

The results of the filter bed experiments under flow conditions are summarized in Table 7. In the column with the basic adsorbent SHM-26, the arsenic breakthrough was observed after a short service life. This can be explained by high pH values of the pore water and the relatively low schwertmannite content of the adsorbent in the column. In the column with SHM-49, the arsenic breakthrough was observed after the replacement of about 930 filter bed volumes. Only 50% of the As(III) adsorption capacity from the batch tests without pH buffering was reached. In the column with SHM-39, the breakthrough proceeded after the replacement of about 1350 filter bed volumes and an adsorption capacity of 41,5 mg As/g SHM-39 (64 % of the batch test result) was reached. In the column with the adsorbent SHM-44, the breakthrough was observed after the replacement of 2050 filter bed volumes, 35 mg As/ g adsorbent adsorption capacity (83 % of the As(III) adsorption capacity estimated in the batch test without pH buffering) was reached. During the whole experimental period, no abrasive wear could be observed in the effluent of any column.

By the use of compositions with schwertmannite and organic polymer binders or compacted schwertmannnite composition in filter bed systems, longer service life and higher throughputs are possible compared to the use of iron hydroxide-based adsorbents. Thereby, dumping costs will be reduced due to lower amounts of contaminated sludges.

Example 12:

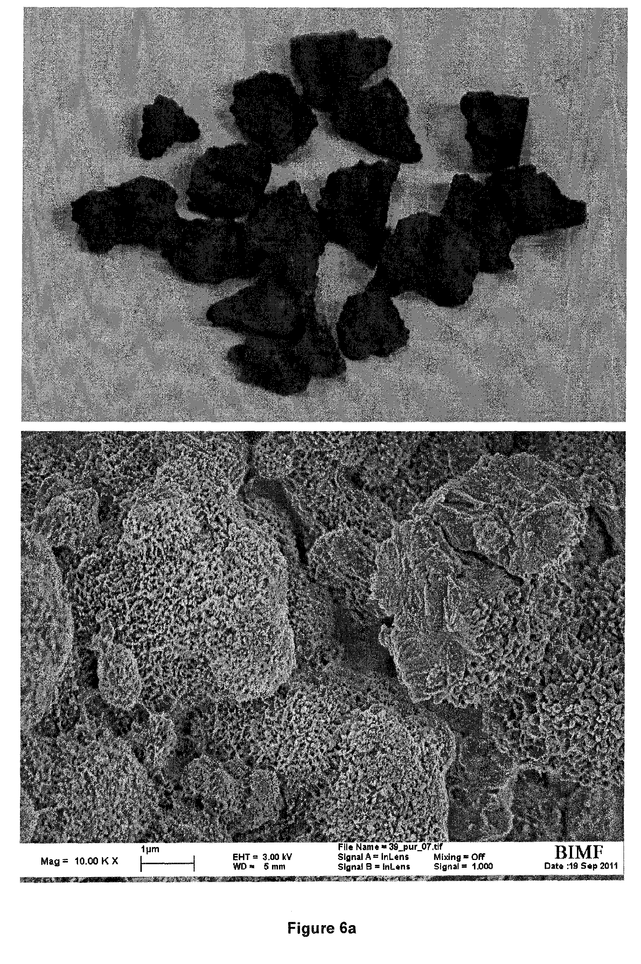

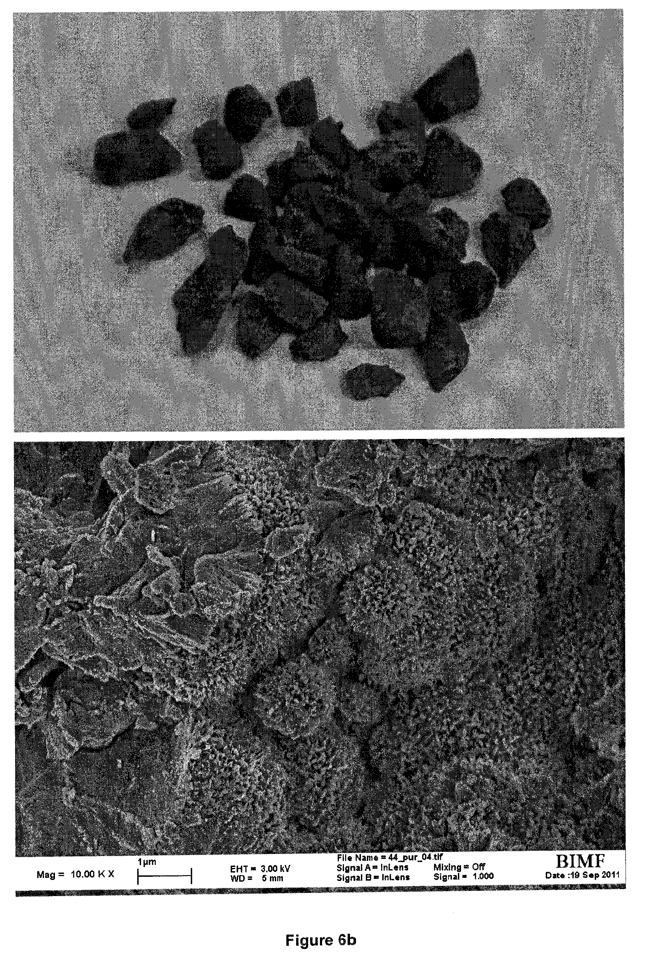

The adsorbents S5-039 and S5-044 were viewed under a scanning electron microscope (REM LE1530, Zeiss) at a magnification of 10,00 K x 1 $\mu$m. Figures 6a and 6b show that the fine needle-like structure, which is characteristic for schwertmannite, has been retained.

Example 13:

Schwertmannite powder having a water content of 10 wt.-% was mixed with 4.15 wt.-% (solids) VINNAPAS EPN 865 as a binder. The mixture was compressed in press 2 until a maximum pressure of 140 bar was reached. After holding the maximum pressure for 1 s, the pressure was reduced. The obtained pellet was subsequently thermally treated for 48 h at 85 °C to cure the binder. Then the pellet was communited by a hammer and classified to a size of 1 to 2 mm. The adsorbent was tested as explained above. It had an abrasive wear of 18 wt.-%.

**Claims**

1. A method of preparing an adsorbent comprising schwertmannite, wherein the method comprises the following steps:

   (i) providing a composition comprising schwertmannite and water, wherein the water content of the composition is from about 7.5 to about 25 wt.-%; and
   (ii) compacting the composition to provide a compacted composition.

2. The method according to claim 1, wherein the compaction is conducted under a pressure from about 100 to about 280 bar.

3. The method according to claim 1 or 2, wherein the compacted composition is comminuted to provide particles having a size from about 0.1 to about 10 mm.

4. A method of preparing an adsorbent comprising schwertmannite, wherein the method comprises the following steps:

   (a) providing a composition comprising schwertmannite;
   (b) mixing the composition with an organic polymer or a precursor of an organic polymer to provide a mixed composition;
   (c) solidifying or curing the organic polymer or the precursor to provide a solidified or cured composition.

5. The method according to claim 4, wherein the ratio of organic polymer to schwertmannite is from about 4 / 100 to about 20 / 100 on a weight basis.

6. The method according to claim 4 or 5, wherein the organic polymer possesses at least one acidic group which is preferably selected from carboxylic acid groups, derivatives thereof and combinations thereof.

7. A method of preparing an adsorbent comprising schwertmannite, wherein the method comprises the following steps:

   (A) providing a composition comprising schwertmannite;
   (B) mixing the composition with an organic polymer or a precursor of an organic polymer to provide a mixed composition;
   (C) compacting the mixed composition to provide a compacted composition.

8.  The method according to claim 7, wherein the composition comprising schwertmannite further comprises water and the water content is from about 7.5 to about 25 wt.-%.

9.  The method according to claim 7 or 8, wherein the organic polymer possesses at least one acidic group which is preferably selected from carboxylic acid groups, derivatives thereof and combinations thereof.

10. The method according to any of claims 7 to 9, wherein the compacted composition is further subjected to solidification or curing.

11. An adsorbent obtainable by the method according to any of claims 1 to 10.

12. A method of purifying a liquid comprising the step of contacting the adsorbent according to claim 11 with the liquid, wherein preferably a compound comprising an element selected from the group consisting of S, Se, Te, P, As, Sb, Bi, Pb, Cs, a transition metal, lanthanide or actinide, including Cr, Mo, U, Ra, Ni, Yb, V, Cd, or Hg, is removed from the liquid.

13. A method of purifying gas comprising the step of contacting the adsorbent according to claim 11 with the gas, wherein preferably hydrogen sulfide or hydrogen cyanide is removed from the gas.

14. Use of schwertmannite for the purification of biogas which contains hydrogen sulfide, wherein preferably the schwertmannite is first contacted with a phosphate-containing solution and is subsequently contacted with the biogas.

**Figure 1a**

**Figure 1b**

**Figure 2**

**Figure 3a**

Figure 3b

Figure 4

Figure 5

Mag = 10.00 K X   1μm   EHT = 3.00 kV   File Name = 39_pur_07.tif
WD = 5 mm   Signal A = InLens   Mixing = Off
Signal B = InLens   Signal = 1.000
BIMF
Date :19 Sep 2011

Figure 6a

| Mag = 10.00 K X | 1 µm ⊢───────┤ | EHT = 3.00 kV WD = 5 mm | File Name = 44_pur_04.tif Signal A = InLens Signal B = InLens | Mixing = Off Signal = 1.000 | BIMF Date :19 Sep 2011 |

**Figure 6b**

Europäisches
Patentamt

European
Patent Office

Office européen
des brevets

# EUROPEAN SEARCH REPORT

Application Number

EP 12 16 7884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Eberhard Janneck ET AL: "From Waste to Valuable Substance: Utilization of Schwertmannite and Lignite Filter Ash for Removal of Arsenic and Uranium from Mine Drainage", Proceedings 2011 "11th International Mine Water Association Congress - Mine Water - Managing the Challenges", 1 September 2011 (2011-09-01), pages 359-364, XP55040339, Aachen ISBN: 978-1-89-700947-5 Retrieved from the Internet: URL:http://www.imwa.info/docs/imwa_2011/IMWA2011_Janneck_351.pdf [retrieved on 2012-10-08] * Design of the test runs; page 360, right-hand column * * table 2 * * Results; page 360 - page 361 * ----- -/-- | 11,12 | INV. B01J20/28 B01J20/02 B01J20/06 B01J20/30 C02F1/28 C02F1/62 |

TECHNICAL FIELDS
SEARCHED (IPC)

B01J
C02F

The present search report has been drawn up for all claims

| Place of search | Date of completion of the search | Examiner |
|---|---|---|
| The Hague | 9 October 2012 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 12 16 7884

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Stefan Wilck: "Veredelung von Eisenhydroxisulfaten aus Tagebauwässern durch Anwendung von Mikrowellenenergie", , 4 February 2011 (2011-02-04), pages 1-162, XP55040343, TU Berlin Retrieved from the Internet: URL:http://opus.kobv.de/tuberlin/volltexte /2011/2952/pdf/wilck_stefan.pdf [retrieved on 2012-10-08] * page 12 - page 13 * * Kapitel 4. Stoffliche Charakterisierung von Eisenhydroxisulfat; page 14 - page 24 * * 7.2.2 Thermische Behandlung von EHS-Material unter Normalbedingungen 7.2.3 Thermische Behandlung von EHS-Material unter inerten Bedingungen; page 87 - page 89 * * 7.3 Pelletierung von sulfatfreiem EHS-Material; page 89 - page 91 * ----- | 1-3 | |
| X | DATABASE WPI Week 201241 Thomson Scientific, London, GB; AN 2012-E54928 XP002684857, -& KR 2012 0033924 A (MINE RECLAMATION CORP) 9 April 2012 (2012-04-09) * abstract * * claims 1-7 * ----- -/-- | 4-6,11, 12 | TECHNICAL FIELDS SEARCHED (IPC) |

The present search report has been drawn up for all claims

| Place of search | Date of completion of the search | Examiner |
|---|---|---|
| The Hague | 9 October 2012 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 12 16 7884

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 228 802 B1 (SCRANTON JR DELBERT C [US] ET AL) 8 May 2001 (2001-05-08)<br>* column 1, line 1 - line 11 *<br>* column 3, line 22 - line 38 *<br>* column 3, line 40 - column 4, line 12 *<br>* claim 1 *<br>----- | 7-10 | |
| X | US 2006/088464 A1 (IKEDA HODAKA [JP] ET AL) 27 April 2006 (2006-04-27)<br>* claims 1-6 *<br>* paragraphs [0015], [0035] *<br>----- | 11,12 | |
| X | US 2010/248941 A1 (VILORIA ALFREDO [VE] ET AL) 30 September 2010 (2010-09-30)<br>* claims 1,3,4,8 *<br>* paragraphs [0022] - [0026], [0028] *<br>----- | 13,14 | |
| X | EP 1 582 505 A1 (LANXESS DEUTSCHLAND GMBH [DE]) 5 October 2005 (2005-10-05)<br>* claims 12-14 *<br>* paragraphs [0048] - [0059], [0069] *<br>----- | 13,14 | TECHNICAL FIELDS SEARCHED (IPC) |

The present search report has been drawn up for all claims

| Place of search | Date of completion of the search | Examiner |
|---|---|---|
| The Hague | 9 October 2012 | Kaluza, Nicoleta |

EPO FORM 1503 03.82 (P04C01)

**ANNEX TO THE EUROPEAN SEARCH REPORT
ON EUROPEAN PATENT APPLICATION NO.**

EP 12 16 7884

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2012

| Patent document cited in search report | | Publication date | Patent family member(s) | | Publication date |
|---|---|---|---|---|---|
| KR 20120033924 | A | 09-04-2012 | NONE | | |
| US 6228802 | B1 | 08-05-2001 | NONE | | |
| US 2006088464 | A1 | 27-04-2006 | JP | 3828887 B2 | 04-10-2006 |
| | | | JP | 2004256383 A | 16-09-2004 |
| | | | US | 2006088464 A1 | 27-04-2006 |
| | | | WO | 2004069741 A1 | 19-08-2004 |
| US 2010248941 | A1 | 30-09-2010 | US | 2010248941 A1 | 30-09-2010 |
| | | | US | 2010313756 A1 | 16-12-2010 |
| EP 1582505 | A1 | 05-10-2005 | AT | 399147 T | 15-07-2008 |
| | | | CN | 1689694 A | 02-11-2005 |
| | | | DE | 102004016601 A1 | 13-10-2005 |
| | | | EP | 1582505 A1 | 05-10-2005 |
| | | | ES | 2308326 T3 | 01-12-2008 |
| | | | JP | 2005288439 A | 20-10-2005 |
| | | | JP | 2012071305 A | 12-04-2012 |
| | | | US | 2005247636 A1 | 10-11-2005 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005095732 A
- JP 2005074259 A
- JP 2006326405 A
- US 20090324467 A

**Non-patent literature cited in the description**

- **PEIFFER et al.** *Environ. Sci. Technol.,* 2007, vol. 41, 3159-3164